# EUROPEAN PATENT APPLICATION

(11) **EP 3 955 200 A1**
(43) Date of publication of application: **16.02.2022**
(21) Application number: 21154256.8
(22) Date of filing: 29.01.2021
(51) Int. Cl.: G06Q 30/02

(54) **METHOD FOR PROFILING THE USERS OF AN ONLINE PRODUCT SALES PLATFORM**

(30) Priority: 13.08.2020 IT 202000020101
(71) Applicant: Yolo Group S.r.l., 20124 Milano (MI) (IT)
(72) Inventor: De Cobelli, Gianluca, 20124 Milano MI (IT); Ranucci Bradimarte, Simone, 20124 Milano MI (IT)
(74) Representative: Perani & Partners S.p.A.

(57) **Abstract**

A method for profiling the users of an online product sales platform is described; said method comprises the following steps:
- 1) providing at least one web server connected to the internet in which a respective online platform resides;
- 2) providing a database associated with the at least one web server;
- 3) providing a processing unit associated with the at least one web server, on which an algorithm resides configured to provide a purchase suggestion to a user;
- 4) defining a plurality of actions that can be performed by the user during navigation on the online platform;
- 5) generating a set of historical data detecting the actions performed by the user on the online platform in relation to each product and storing them in the database;
- 6) processing the set of historical data for generating an interest index representative of the attractiveness of a product for the user;
- 7) generating a targeted purchase suggestion for the individual user by putting the available products in order of attractiveness according to the interest index of each product.

## Description

### Technical field

The present invention relates to a method for profiling the users of an online product sales platform.

### State of the art

Online sales platforms and methods for profiling users by a seller are known in the state of the art. These methods provide for the collection of data that allow analysis on the users, i. e. customers, to be carried out in order to adopt sales strategies. For example, a seller is able to observe which products are most preferred by a set of users, in order to adapt his products to the customers, possibly modifying them, to increase sales.

### Problem of the prior art

Disadvantageously, such methods are useful to draw only general considerations. In fact, these strategies consider customers as a group and not the preferences of the individual user. Indeed, a product that, for example, is less preferred by customers may instead be the preferred one for a specific user.

### SUMMARY OF THE INVENTION

In this context, the technical task underlying the present invention is to propose a method for customer profiling which allows to overcome the aforementioned disadvantages of the prior art.

In particular, it is an object of the present invention to make available a method which allows to profile customers so as to enhance individual users on the basis of their specific preferences.

It is a further object of the present invention to provide an output of purchase suggestions aimed at a specific user.

The technical task and the specified aims are substantially achieved by a method, comprising the technical characteristics set forth in one or more of the appended claims.

### Advantages of the invention

In particular, the method according to the present invention solves the technical problem since it takes into account purchases already made by a user and exploits the similarity between the choices of more users.

Thanks to this method it is possible to provide a specific user with a targeted suggestion based on his preferences.

Advantageously, a user will be more inclined to buy again if the suggestions provided are representative of his interests.

Advantageously, the method according to the present invention allows to maximize the sales process.

### Brief description of the figures

The characteristics and advantages of the present invention will become clear from the following detailed description of a possible practical embodiment, illustrated by way of non-limiting example in the set of drawings, wherein:

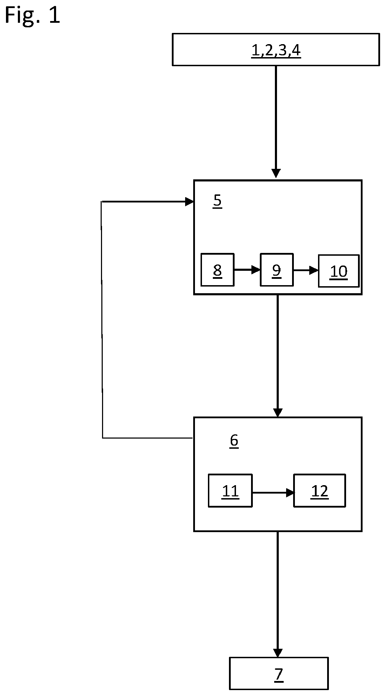

- Figure 1 shows a block diagram which schematically represents the method according to the present invention.

### DETAILED DESCRIPTION OF THE INVENTION

Even when not explicitly highlighted, the individual features described with reference to the specific embodiments must be considered as accessories and/or exchangeable with other features, described with reference to other embodiments.

The present invention relates to a method for profiling the users of an online product sales platform. Preferably, this method is applied to an insurance product sales platform.

The method according to the present invention comprises the following steps:
1) providing at least one web server connected to the internet in which a respective online platform resides;
2) providing a database associated with the at least one web server;
3) providing a processing unit associated with the at least one web server, on which an algorithm resides configured to provide a purchase suggestion to a user;
4) defining a plurality of actions that can be performed by the user during navigation on the online platform;
5) generating a set of historical data detecting the actions performed by the user on the online platform in relation to each product and storing them in the database;
6) processing said set of historical data for generating an interest index representative of the attractiveness of a product for the user;
7) generating a targeted purchase suggestion for the individual user by putting the available products in order of attractiveness according to the interest index of each product.

Preferably, step 5) of generating a set of historical data comprises sub-step 8) of associating, with each user, user data relating to a plurality of user characteristics.

The user data is part of the historical data and allows to frame the user in order to eventually understand his preferences and predict the types of purchase he could make.

User data preferably comprises user personal data. Therefore, said sub-step 8) of associating, with each user, user data envisages recording personal data. This step takes place during a user registration process within the online platform. The personal data comprises for example the age, residence, place of birth of the user.

Sub-step 8) of associating, with each user, user data further comprises recording a sales log representative of purchases already made by the user. In fact, the user data comprises the sales log of the purchases made by the user.

Sub-step 8) of associating, with each user, user data further comprises tracking one or more of the user's behaviour traits during and after the purchase.

By these behaviours traits during and after the purchase it is meant, for example, how much time the user spends on a product page, how many times he accesses the platform (number of logins made), how many requests for quotations he submits for a product, how many times he contacts a customer service representative of the platform to request information, and more. Therefore, preferably, the tracking of one or more behaviours traits comprises one or more of:
- identifying a residence time spent on a product page;
- identifying a number of logins made on said platform;
- identifying a number of quotations requested;
- identifying a number of contact requests with a customer service representative of the platform.

Sub-step 8) of associating, with each user, user data relating to a plurality of user characteristics further comprises identifying enriched data by sources external to the platform. User interests may comprise, for example, sports, finance, pets.

Such enriched data is representative of the users' interests. The enriched data is collected for example through cookie-based systems or other.

Step 5) of generating a set of historical data therefore comprises a sub-step of 9) generating a similarity index between users for each user characteristic. Sub-step 9) is subsequent to sub-step 8).

For example, users can be grouped based on their propensity to buy and/or based on their liking for a specific product after purchase.

Therefore, sub-step 9) is followed by a sub-step in which 10) a plurality of groups of users are defined by grouping the users on the basis of the similarity indices between users.

Preferably, sub-step 10) of defining a plurality of groups of users comprises the definition of a matrix comprising the users and the similarity indices between users. The users are arranged within the matrix based on the similarity indeces between users. In this way, groups of users with common characteristics are subsequently identified within the matrix.

The matrix is n-dimensional based on the number n of similarity indices between users. For example, taking into account two similarity indices between users, i. e. relating to two characteristics, the matrix will be two-dimensional.

Once sub-step 10) of defining a plurality of groups of users has been carried out, each user is associated with a respective group.

Preferably, step 7) of generating a purchase suggestion comprises matching the interest index to the user on the basis of the order of attractiveness of the interest indices of products for the group of users to which the user pertains.

Advantageously, the purchase suggestion is more precise since the group of users, by understanding the user data of all users belonging to the group, generates more reliable results than the individual user. In fact, the method is based on the concept of identifying the preferences of a user not based on the behaviour of the individual user, but on the similarity of the choices made by more users belonging to the same group, that is, having characteristics common to the user.

In greater detail, step 6) of generating an interest index comprises a first sub-step of 11) generating a similarity index between similar products for matching to each group of users a group of potentially interesting products. Similarity indices between products can for example be related to a category to which a product belongs, or to the price range of the product.

Preferably, sub-step 11) of generating a similarity index between similar products is performed through the cosine similarity technique.

Step 6) of generating an interest index comprises a second sub-step of 12) generating an enjoyment index representative of the interest of each user with respect to a product.

The enjoyment index in particular is preferably a value from 0 to 3 attributed on the basis of the user actions as described below.

An enjoyment index is low, i. e. equal to 1, if for example at least one of the following conditions is met:
- the user spends ten seconds actively, i. e. performing some action, on the product page of reference;
- the user has viewed the product page of reference at least twice and has actively spent at least once more than five seconds on the same page;
- the age of the user is within the target age of the product;
- at least one user data related to the user's interest coincides with the product category.

The enjoyment index is medium, i. e. equal to 2, if for example at least one of the following conditions is met:
- more than one condition defining a low interest is met;
- the total seconds spent on the product page are at least one hundred and twenty and the seconds actively spent are greater than five;
- the user has contacted the support at least once to request information on the product;
- the user has downloaded at least one document related to the product.

The enjoyment index is instead high, i. e. equal to 3, if for example at least one of the following conditions is met:
- more than one condition defining a medium interest is met;
- the user has accessed at least one section of order, payment, confirmation, present on the platform in relation to a purchase step of the reference product.

Finally, the enjoyment index is zero, i. e. equal to 0, if none of the conditions relating to low, medium or high interest are met at least once.

The interest index is then calculated as the product of the similarity index between products and the enjoyment index.

Finally, it should be noted that, preferably, the steps of:
5) generating a set of historical data detecting the actions performed by the user on the online platform in relation to each product and storing them in the database;
6) processing said set of historical data for generating an interest index representative of the attractiveness of a product for the user
are repeated whenever the user performs an action on the online platform.

Advantageously, the reliability of the interest index improves over time and as the historical data collected increases.

In fact, historical data comprises user data, user actions on the platform, the groups of users, the products available on the platform, the similarity indices between users, the similarity indices between products. In other words, historical data comprises all the data that contribute to the generation of the interest index. These data are continuously reused for the generation of the interest index in order to provide suggestions to the user in an increasingly efficient and effective way.

Obviously, a person skilled in the art, for the purpose of satisfying contingent and specific requirements, can make numerous modifications to the variants described above, all therefore contained within the scope of protection as defined in the following claims.

## Claims

1. Method for profiling the users of an online product sales platform, said method comprising the following steps:
- 1) providing at least one web server connected to the internet in which a respective online platform resides;
- 2) providing a database associated with the at least one web server;
- 3) providing a processing unit associated with the at least one web server, on which an algorithm resides configured to provide a purchase suggestion to a user;
- 4) defining a plurality of actions that can be performed by the user during navigation on the online platform;
- 5) generating a set of historical data detecting the actions performed by the user on the online platform in relation to each product and storing them in the database;
- 6) processing said set of historical data for generating an interest index representative of the attractiveness of a product for the user;
- 7) generating a targeted purchase suggestion for the individual user by putting the available products in order of attractiveness according to the interest index of each product.

2. Method according to the preceding claim, wherein said step 5) of generating a set of historical data comprises:
- 8) associating, with each user, user data relating to a plurality of user characteristics;
- 9) generating a similarity index between users for each user characteristic;
- 10) defining a plurality of groups of users by grouping the users on the basis of the similarity indices between users;
- associating each user with a respective group.

3. Method according to the preceding claim, wherein step 7) of generating a purchase suggestion comprises matching the interest index to the user on the basis of the order of attractiveness of the interest indices of products for the group of users to which the user pertains.

4. Method according to the preceding claim, wherein the step of generating an interest index comprises:
- 11) generating a similarity index between similar products for matching to each group of users a group of potentially interesting products;
- 12) generating an enjoyment index representative of the interest of each user with respect to a product;
- calculating the interest index as a product between the similarity interest between products and the enjoyment index.

5. Method according to the preceding claim, wherein said step 11) of generating a similarity index between similar products is performed through the cosine similarity technique.

6. Method according to the preceding claim, wherein the step of defining a plurality of groups of users comprises
- defining a matrix comprising the users and the similarity indices between users;
- identifying, within the matrix, groups of users having common characteristics.

7. Method according to any of the preceding claims, wherein the steps of
- 5) generating a set of historical data detecting the actions performed by the user on the online platform in relation to each product and storing them in the database;
- 6) processing said set of historical data for generating an interest index representative of the attractiveness of a product for the user
are repeated whenever the user performs an action on the online platform.

8. Method according to any one of claims 2 to 7, wherein step 8) of associating, with each user, user data related to a plurality of user characteristics comprises:
- recording personal data;
- recording a sales log representative of purchases already made by the user;
- tracking one or more of the user's behaviour traits during and after the purchase.

9. Method according to the preceding claim, wherein said step of tracking one or more of the behaviour traits comprises one or more of the following steps:
- identifying a residence time spent on a product page;
- identifying a number of logins made on said platform;
- identifying a number of quotations requested;
- identifying a number of contact requests with a customer service representative of the platform.

10. Method according to any of the preceding claims, wherein said step 8) of associating, with each user, user data related to a plurality of characteristics of the user comprises identifying enriched data from sources external to the platform, said enriched data being representative of interests of the users.
